(19) Europäisches Patentamt / European Patent Office / Office européen des brevets

(11) **EP 1 884 919 A1**

(12) **EUROPEAN PATENT APPLICATION**
published in accordance with Art. 153(4) EPC

(43) Date of publication:
**06.02.2008 Bulletin 2008/06**

(51) Int Cl.:
*G09G 5/02* (2006.01)   *G09G 3/20* (2006.01)
*G03B 21/00* (2006.01)   *G06T 1/00* (2006.01)
*H04N 1/60* (2006.01)   *H04N 1/46* (2006.01)

(21) Application number: **06756482.3**

(22) Date of filing: **23.05.2006**

(86) International application number:
**PCT/JP2006/310226**

(87) International publication number:
**WO 2006/126526 (30.11.2006 Gazette 2006/48)**

(84) Designated Contracting States:
**DE FR GB**

(30) Priority: **23.05.2005   JP 2005149580**

(71) Applicants:
• **National Institute of Information and Communications Technology Incorporated Administrative Agency**
**Tokyo 184-8795 (JP)**
• **Olympus Corporation**
**Tokyo 151-0072 (JP)**

(72) Inventors:
• **AJITO, Takeyuki**
**Tokyo, 1920045 (JP)**

• **YAMAGUCHI, Masahiro**
**TOKYO INSTITUTE OF TECHNOLOGY**
**Yokohama-shi, Kanagawa 2268503 (JP)**
• **MURAKAMI, Yuri**
**TOKYO INSTITUTE OF TECHNOLOGY**
**Yokohama-shi, Kanagawa 2268503 (JP)**

(74) Representative: **von Hellfeld, Axel**
**Wuesthoff & Wuesthoff**
**Patent- und Rechtsanwälte**
**Schweigerstrasse 2**
**81541 München (DE)**

(54) **MULTI-PRIMARY COLOR DISPLAY METHOD AND DEVICE**

(57)   The object of the present invention is to provide a multi-primary color display method and device, which can achieve miniaturization and perform multi-primary color display with high definition and finer gradation without decreasing the time resolution. When displaying an image by four or more primary colors, a first image is formed by light of two or more primary colors, and the image consisting of four or more primary colors is displayed by spatially modulating the first image with a second image consisting of two or more primary colors having spectroscopic characteristics different from spectroscopic characteristics of the light of primary colors forming the first image.

FIG. 1

EP 1 884 919 A1

**Description**

TECHNICAL FIELD

The present invention relates to a multi-primary color display method and device which display an image in four or more primary colors, and thereby reproduce an image having a wide color gamut.

RELATED ART

For example, display devices, such as a CRT display, a liquid crystal display, and a liquid crystal projector, are widely used as means for displaying a digital color image input by a scanner, a digital camera, or the like. These display devices are usually reproducing various colors by additive color mixing of RGB three primary colors.

However, the range of the color which can be expressed by the additive color mixing of three primary colors is limited within a range inside a triangle formed by the three primary colors on the chromaticity diagram. For this reason, it is not possible to reproduce all colors existing in nature, and hence there may be a case where a bright color having high saturation cannot be reproduced.

As a measure to solve the above described problem, there have been proposed several multi-primary color display methods in which an image is accurately reproduced, by realizing a wide color reproduction range in such a manner that the number of primary colors is increased to four or more and that the image is displayed by the increased primary colors (see, for example, Patent Documents 1 to 5).

Patent Document 1: Japanese Patent Laid-Open No. 2000-338950

Patent Document 2: Japanese Patent Laid-Open No. 2003-107472

Patent Document 3: Japanese Patent Laid-Open No. 2003-228360

Patent Document 4: Japanese Patent Laid-Open No. 2003-249174

Patent Document 5: Japanese Patent Laid-Open No. 2004-286963

However, in the multi-primary color display methods conventionally proposed, any of the above described methods has a problem in the device constitution, which is caused by increasing the number of primary colors more than the conventional three primary colors.

For example, in the color reproduction system disclosed in Patent Document 1, there is a problem that the size of the device is increased because two sets of projectors are used. Also, in the video display device disclosed in Patent Document 3, there is a problem that the size of the device is similarly increased because a light path needs to be provided for a spatial optical modulation element corresponding to each primary color.

Further, in the plasma display device disclosed in Patent Document 4, there is a problem that the resolution is decreased because a sub pixel of each primary color need to be provided corresponding to the number of primary colors in order to constitute one pixel. Further, in the image display device disclosed in Patent Document 2, and the projection type display device disclosed in Patent Document 5, similarly to the conventional three primary color display, a small-sized multi-primary color display having high resolution is realized by time division multiplexing of the modulated primary colors. However, there is a problem that when the number of primary colors is increased, the time resolution correspondingly decreases as compared with the conventional three primary color display, because the time domain is divided for the modulation of each primary colors.

Therefore, the present invention has been made in view of the above described circumstances. An object of the present invention is to provide a multi-primary color display method and device which can achieve miniaturization and perform multi-primary color display with high definition and finer gradation without decreasing the time resolution.

Disclosure of the Invention

The first aspect of the invention, which achieves the object described above, resides in a multi-primary color display method for displaying an image by four or more primary colors, comprising:

forming a first image by light of two or more primary colors; and

displaying an image consisting of four or more primary colors by spatially modulating the first image with a second image consisting of two or more primary colors having spectroscopic characteristics different from the spectroscopic characteristics of the light of two or more primary colors forming the first image.

The second aspect of the invention resides in the multi-primary color display method according to the first aspect, wherein

at least one primary color forming the second image has a wavelength band partially overlapping with a wavelength band of light of at least two primary colors forming the first image, and

light of at least one primary color forming the first image has a wavelength band partially overlapping with a wavelength band of at least two primary colors forming the second image.

The third aspect of the invention resides in the multi-primary color display method according to the first or the second aspect, wherein

the first image is formed by spatially modulating the light of two or more primary colors.

The fourth aspect of the invention resides in the multi-primary color display method according to the first or the second aspect, wherein

the first image is formed by spatially emitting the light of two or more primary colors.

The fifth aspect of the invention resides in the multi-primary color display method according to any one of the first to fourth aspects, wherein

the second image is formed by spatially modulating light of the two or more primary colors.

The sixth aspect of the invention resides in the multi-primary color display method according to the first or the second aspect, wherein

the second image is formed by being developed on an image medium with the two or more primary colors.

The seventh aspect of the present invention, which further achieve the object described above resides in a multi-primary color display device adapted to display an image formed by four or more primary colors, comprising:

first image forming means adapted to form a first image by light of two or more primary colors; and

second image forming means adapted to form a second image consisting of two or more primary colors having a spectroscopic characteristics different from a spectroscopic characteristics of the light of primary colors forming the first image, and

wherein an image consisting of four or more primary colors is displayed by spatially modulating the first image formed by the first image forming means with the second image formed by the second image forming means.

The eighth aspect of the invention resides in the multi-primary color display device according to the seventh aspect, wherein

at least one primary color forming the second image has a wavelength band partially overlapping with a wavelength band of light of at least two primary colors forming the first image, and

light of at least one primary color forming the first image has a wavelength band partially overlapping with a wavelength band of at least two primary colors forming the second image.

The ninth aspect of the invention resides in the multi-primary color display device according to the seventh or eighth aspect, wherein

position adjustment means adapted to adjust spatial position of at least one of the first image forming means and the second image forming means.

The tenth aspect of the invention resides in the multi-primary color display device as set fort in any one of the seventh to ninth aspects, wherein

geometric conversion means adapted to perform geometric correction of an image signal input into at least one of the first image forming means and the second image forming means.

The eleventh aspect of the invention resides in the multi-primary color display device according to any one of the seventh to tenth aspects, wherein

multi-primary color signal conversion means adapted to receive an image signal based on tristimulus values or three primary colors and to convert the image signal into signals of four or more primary colors, and adapted to output the signal of at least two primary colors of the converted signals to the first image forming means, and to output the signal of remaining two or more primary colors of the converted signals to the second image forming means.

The twelfth aspect of the invention resides in the multi-primary color display device according to any one of the seventh to ninth aspects, wherein

the second image forming means is an image medium on which the second image is developed.

The thirteenth aspect of the invention resides in the multi-primary color display device according to any one of the seventh to twelfth aspects,

the first image forming means is a projector adapted to project the first image, with the second image forming means being at an image forming position of the projector.

According to the present invention, a first image is formed by light of two or more primary colors, and an image consisting of four or more primary colors is displayed by spatially modulating the first image with a second image consisting of two or more primary colors having spectroscopic characteristics different from the spectroscopic characteristics of the light of two or more primary colors forming the first image. Thereby, it is possible to miniaturize and simplify the device. Further, the multi-primary color display is realized not by increasing pixels of primary colors in the spatial direction but by increasing the pixels in the depth direction, and hence the resolution does not decrease. Further, the first image and the second image can be formed temporally in parallel, and hence the time resolution is not decreased due to the increase in the number of primary colors. Further, since the intensity modulation of each primary color can be performed in two steps by forming the first image and the second image, it is also possible to reproduce an image with finer gradation as compared with the conventional multi-primary color display.

Brief Description of the Drawings

Fig. 1 is a figure for explaining a principle of a multi-primary color display method according to the present invention;

Fig. 2 is a figure showing an example of spectroscopic characteristics of primary colors respectively modulated by the first spatial optical modulation element and the second spatial optical modulation element shown in Fig. 1;

Fig. 3 is a figure for explaining a method for generating multiple primary colors in case of using the primary colors in Fig. 2;

Fig. 4 is a figure showing spectroscopic characteristics and chromaticity of six primary colors generated as shown in Fig. 3;

Fig. 5 is a figure showing a vertex configuration of a color solid of the six primary colors generated as shown in Fig. 3 and transmittance given to the first spatial optical modulation element and the second spatial optical modulation element for generating colors of the respective vertexes;

Fig. 6 is a figure showing a non-displayable primary color constitution and a non-displayable region in the color solid of the six primary colors as shown in Fig.3;

Fig. 7 is a figure for explaining a method for making it possible to relatively display a color in the non-displayable region in Fig. 6;

Fig. 8 is a figure for explaining a method for reproducing a color within the color solid by six primary colors;

Fig. 9 is a figure showing another example of spectroscopic characteristics of primary colors respectively modulated by the first spatial optical modulation element and the second spatial optical modulation element shown in Fig. 1;

Fig. 10 is a figure showing a schematic constitution of a multi-primary color display device according to a first embodiment of the present invention;

Fig. 11 is a figure showing a detailed constitution of an image projection device of Fig. 10;

Fig. 12 is a figure showing a detailed constitution of the rotary filter of Fig. 11;

Fig. 13 is a figure showing a detailed constitution of the spatial optical modulation element of Fig. 10;

Fig. 14 is a figure showing a modification of the first embodiment, using a reflection type spatial optical modulation element;

Fig. 15 is a figure showing a schematic constitution of a multi-primary color display device according to a second embodiment of the present invention;

Fig. 16 is a figure showing an example of a test chart image displayed at the time of position adjustment in the second embodiment;

Fig. 17 is a schematic side view and front view showing an entire constitution of a multi-primary color display device according to a third embodiment of the present invention;

Fig. 18 is a figure showing an example of a pixel arrangement and positional relation of the first spatial optical modulation element and the second spatial optical modulation element of Fig. 17;

Fig. 19 is also a figure showing another example;

Fig. 20 is also a figure showing another example;

Fig. 21 is a figure showing a schematic constitution of a multi-primary color display device according to a fourth embodiment of the present invention;

Fig. 22 is a figure showing a schematic constitution of a multi-primary color display device according to a fifth embodiment of the present invention;

Fig. 23 is a figure showing a constitution of the first and second rotary filters of Fig. 22, and rotational phases of the rotary filters;

Fig. 24 is a figure showing a schematic constitution of a multi-primary color display device according to a sixth embodiment of the present invention;

Fig. 25 is a figure showing a schematic constitution of a multi-primary color display device according to a seventh embodiment of the present invention;

Fig. 26 is a figure showing a schematic constitution of a multi-primary color display device according to an eighth embodiment of the present invention; and

Fig. 27 is a perspective view showing a schematic constitution of a multi-primary color display device according to a ninth embodiment of the present invention.

Description of Symbols

| | |
|---|---|
| 1 | First spatial optical modulation element |
| 2 | Second spatial optical modulation element |
| 5 | Three primary color/six primary color signal converting section |
| 6 | Image projection device |
| 7 | Spatial optical modulation element driver |
| 8 | Position adjusting mechanism section |
| 9 | Fresnel lens |
| 10 | Spatial optical modulation element |
| 11 | Diffusion plate |
| 12 | White light source |
| 13 | Condensing lens |
| 14 | Rotary filter |
| 14C, 14M, 14Y | Filter |
| 15 | Collimator lens |
| 16 | Mirror |
| 17 | Spatial optical modulation element |
| 18 | Projection lens |
| 19 | Rotary filter driver |
| 20 | Spatial optical modulation element driver |
| 21 | Spatial optical modulation element |
| 22 | Half mirror |
| 25 | Image geometric correction section |
| 26 | Correction data calculation section |
| 27 | Imaging device |
| 28 | Test chart image for position adjustment |
| 31 | White fluorescent lamp |
| 32 | Parabolic mirror |
| 33 | Light guide plate |
| 34 | First spatial optical modulation element |
| 35 | Second spatial optical modulation element |
| 36 | Diffusion plate |
| 37 | Three primary color/six primary color signal converting section |
| 38 | First spatial optical modulation element driver |
| 39 | Second spatial optical modulation element driver |
| 40 | Position adjusting mechanism section |
| 41 | Self light emission type display device |
| 45 | First spatial optical modulation element |
| 46 | Second spatial optical modulation element |
| 47 | Projection lens |
| 48 | White light source |
| 49 | Condensing lens |
| 50 | First rotary filter |
| 51 | Collimator lens |
| 52 | Mirror |
| 53 | Condensing lens |
| 54 | Second rotary filter |
| 55 | Relay lens |
| 56 | Mirror |
| 57 | First spatial optical modulation element driver |
| 58 | First rotary filter driver |
| 59 | Second spatial optical modulation element driver |
| 60 | Second rotary filter driver |
| 61C, 61M, 61Y, 62R, 62G, 62B | Spatial optical modulation element |
| 65 | White light source |

| 66 | Condensing lens |
| 67 | First TIR prism |
| 68 | First color decomposing and composing prism |
| 69 | Relay lens |
| 70 | Second TIR prism |
| 71 | Second color decomposing and composing prism |
| 72 | Projection lens |
| 75 | First spatial optical modulation element driver |
| 76 | Second spatial optical modulation element driver |
| 77 | Rotary filter |
| 78 | Collimator lens |
| 79 | First spatial optical modulation element driver |
| 80 | Rotary filter driver |
| 81 | Image forming apparatus |
| 82 | Image medium |
| 83 | Projector |
| 85 | Positive film |
| 86 | Projection lens |

Best Mode for Carrying Out the Invention

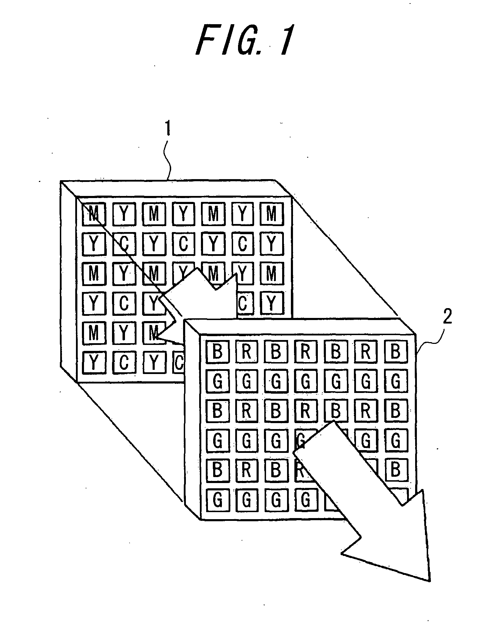

First, a principle of a multi-primary color display method according to the present invention will be described with reference to Fig. 1 to Fig. 8.

In an example of the multi-primary color display method according to the present invention, as shown in Fig. 1, a multi-primary color display is performed by inputting an output of a first spatial optical modulation element 1 which is first image forming means to form a first image, into a second spatial optical modulation element 2 which is second image forming means to form a second image. Here, the first spatial optical modulation element 1 and the second spatial optical modulation element 2 respectively form the first image and the second image by respectively modulating light of three primary colors. However, the three primary colors modulated by the first spatial optical modulation element 1 have spectroscopic characteristics different from spectroscopic characteristics of the three primary colors modulated by the second spatial optical modulation element 2.

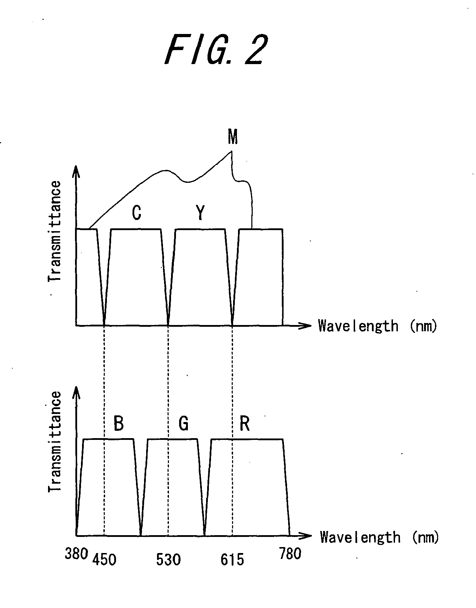

Fig. 2 is a figure showing an example of spectroscopic characteristics of primary colors respectively modulated by the first spatial optical modulation element and the second spatial optical modulation element shown in Fig. 1. Here, there is exemplified a case where the second spatial optical modulation element 2 uses primary colors of the same spectroscopic characteristics of RGB (red, green, blue) as those of the conventional three primary color display, and where the first spatial optical modulation element 1 uses primary colors of spectroscopic characteristics of CMY (cyan, magenta, yellow) in complementary color relationship with RGB. Note that on the contrary, it may also be configured such that the first spatial optical modulation element 1 uses the primary colors of RGB spectroscopic characteristics, and the second spatial optical modulation element 2 uses the primary colors of CMY spectroscopic characteristics.

The spectroscopic characteristics of the primary colors respectively modulated by the first spatial optical modulation element 1 and the second spatial optical modulation element 2 in this way are set in such a manner that the spectroscopic characteristic of a primary color in one of the spatial optical modulation elements have a wavelength band partially overlapping with the spectroscopic characteristic of a primary color in the other of the spatial optical modulation elements.

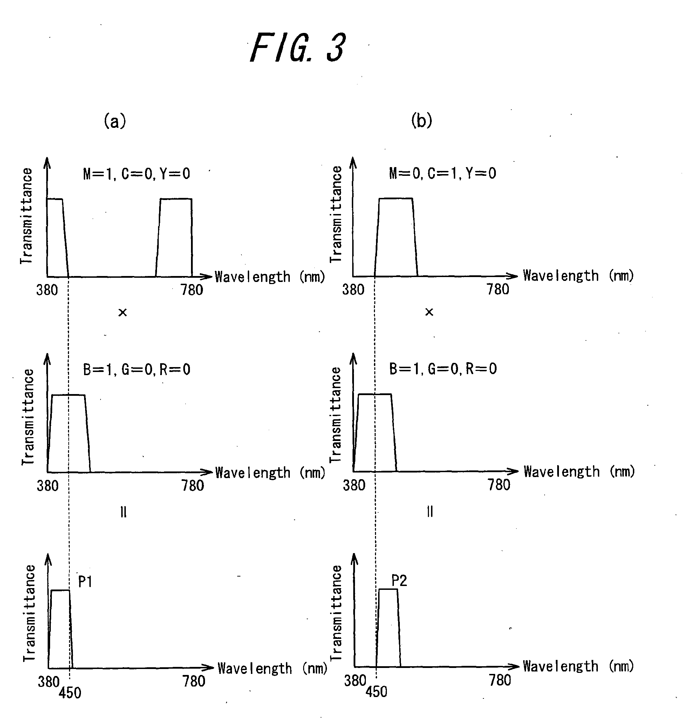

Fig. 3(a) and Fig. 3(b) are figures for explaining a method for generating multiple primary colors at the time of using the primary colors in Fig. 2.

As shown in Fig. 3(a), at first only M (magenta) of the primary colors of CMY is transmitted through the first spatial optical modulation element 1, and then only B (blue) of the primary colors of RGB is transmitted through the second spatial optical modulation element 2, the transmitted light becomes light of primary color having a narrow band existing in the short wavelength side as represented by P1 in the figure.

Further, as shown in Fig. 3(b), only C (cyan) of the primary colors of CMY is transmitted through the first spatial optical modulation element 1, and then, similarly to the above described case, only B (blue) is transmitted through the second spatial optical modulation element 2, the transmitted light becomes, as represented by P2 in the figure, light of primary color having a narrow band existing in the slightly longer wavelength side as compared with P1.

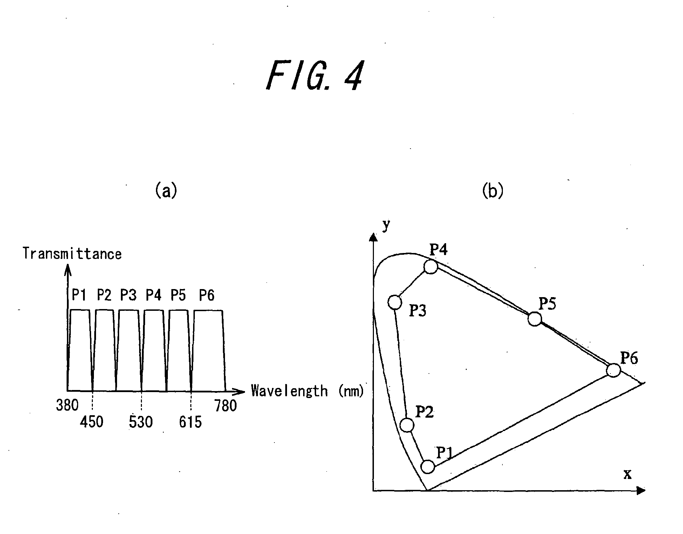

In this way, it is possible to generate six primary colors (P1 to P6) having a narrow band as shown in Fig. 4(a), by combining the transmission and non-transmission of the CMY in the first spatial optical modulation element 1 and the transmission and non-transmission of the RGB in the second spatial optical modulation element 2. Therefore, when the additive color mixing is performed by using the primary colors of P1 to P6, it is possible, as shown by a CIE1931xy chromaticity diagram in Fig. 4(b), to reproduce a color within the hexagon formed by P1 to P6 on the chromaticity diagram, and to thereby perform color reproduction in a wider range as compared with the conventional three primary color display.

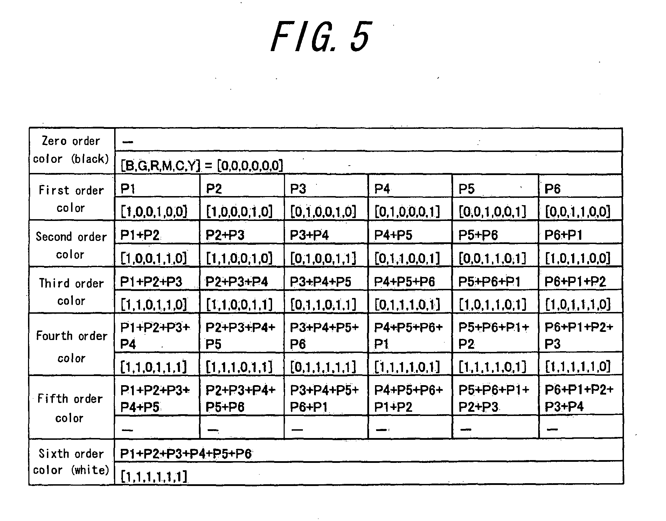

Note that in Fig. 4(b), the color reproduction range (color gamut) by the above described six primary colors of P1 to P6 is represented on the two dimensional plane of the xy chromaticity diagram, but in practice, it is also possible to define a color reproduction range (color solid) in a three dimensional color space by adding the luminance component. In this case, the color solid in the three dimensional color space defined by the additive color mixing of the six primary colors of P1 to P6 becomes a polyhedron, the vertexes of which respectively express as shown in Fig. 5, a zero order color (a color in the state where no primary color is used, that is, black), first order colors (colors in the state where only light of one primary color is maximally emitted), second order colors (colors in the state where adjacent two primary colors in the chromaticity diagram are maximally emitted), third order colors (colors in the state where adjacent three primary colors in the chromaticity diagram are maximally emitted), fourth order colors (colors in the state where adjacent four primary colors in the chromaticity diagram are maximally emitted), fifth order colors (colors in the state where adjacent five primary colors in the chromaticity diagram are maximally emitted), and a sixth order color (a color in the state where light of all primary colors is maximally emitted, that is white).

Therefore, when the transmittance of CMY and RGB of the first and second spatial optical modulation elements 1 and 2 is set on the basis of Fig. 5, it is possible to reproduce the colors of the vertexes of the color solid which can be reproduced by the multi-primary color display (six primary color display). Note that Fig. 5 shows the transmittance (0 represents transmittance of 0%, and 1 represents transmittance of 100%) of CMY and RGB, which is given to the first and second spatial optical modulation elements 1 and 2 in order to make light of the zero order to sixth order color (except for fifth order color) emitted.

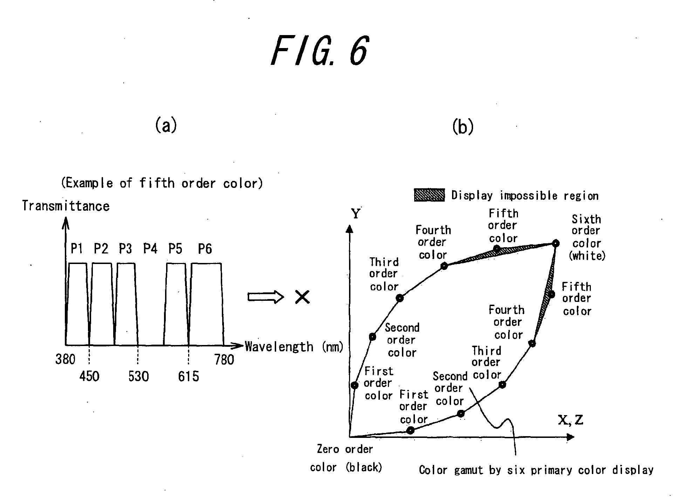

Here, in the case of the above described example, it is not possible to reproduce the fifth order color. This is because, for example, as shown in Fig. 6(a), a color of spectroscopic characteristics in which only one of primary colors of P1 to P6 is missing, cannot be reproduced by the combination of the transmission and non-transmission of CMY and RGB in the first and second spatial optical modulation elements 1 and 2. For this reason, as shown in Fig. 6(b) in which the color solids in the three dimensional color space by both the conventional multi-primary color (six primary color) display method and the multi-primary color (six primary color) display method according to the present invention are schematically shown on a two dimensional plane, it is not possible to reproduce the fifth order color by the multi-primary color display method according to the present invention. Thus, in the region of a bright color near white, there exists a region where the color solid is narrow as compared with the conventional multi-primary color (six primary color) display method.

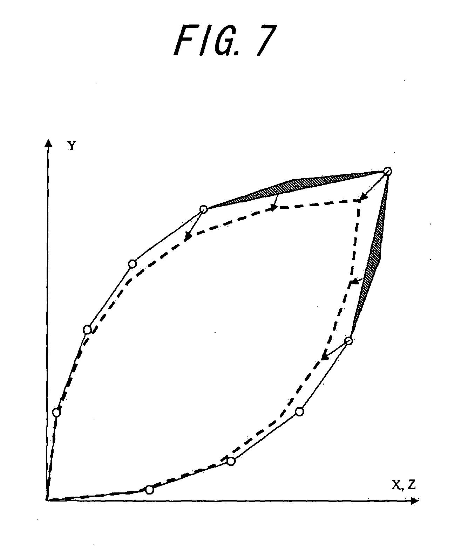

Such a problem can be solved by, for example, a following method. First, for the colors of the first order color to the sixth order color except the fifth order color, the transmittance of the first and second spatial optical modulation elements 1 and 2 shown in Fig. 5 is set to a value $\alpha(<1)$ smaller than 1, and thereby the color solid is reproduced with the color of each vertex of the color solid reduced in the direction of luminance as a whole. Then, the fifth order color which cannot be originally displayed, is reproduced by setting the transmittance of the first and second spatial optical modulation elements 1 and 2 to a value $\beta$ larger than $\alpha$ ($\alpha<\beta\leq1$). In this way, as shown in Fig. 7, although the absolute size of the color solid is reduced in the direction of luminance, it is possible to realize a color reproduction range relatively equivalent to the color reproduction range by the conventional multi-primary color display including the fifth order color, within the color reproducible region according to the present invention.

As described above, it is possible to reproduce the color of each vertex of the color solid by setting the transmittance of the first and second spatial optical modulation elements 1 and 2 as shown in Fig. 5. '

Next, there is described how to reproduce a color within the color solid (except the vertexes) in the above described three dimensional color space by the multi-primary color display method according to the present invention.

First, the color solid is divided into tetrahedrons formed by the vertex of zero order color and adjacent three vertexes of colors other than the zero order color. Next, when a target color desired to be reproduced within the color solid is given by certain coordinate values [X, Y, Z] in the three dimensional color space, a tetrahedron is extracted by determining in which of the plurality of tetrahedrons divided as described above the target color having the coordinate values [X, Y, Z] exists. Thereafter, each transmittance of CMYRGB for reproducing the target color having the coordinate values [X, Y, Z] is calculated by using the transmittance of CMYRGB in each vertex of the extracted tetrahedron and the coordinate values of the each vertex in the three dimensional color space.

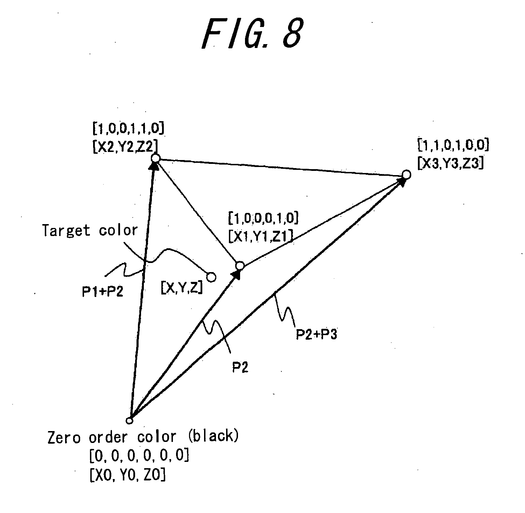

For example, as shown in Fig. 8, when the target color [X, Y, Z] exists within the tetrahedron surrounded by the zero order color, P2, P1+P2, and P2+P3 in the color solid, the coordinate values of the zero order color, P2, P1+P2, and P2+P3 in the three dimensional color space are respectively set to $[X_0, Y_0, Z_0]$, $[X_1, Y_1, Z_1]$, $[X_2, Y_2, Z_2]$, and $[X_3, Y_3, Z_3]$, and the transmittance of CMYRGB for reproducing the zero order color, P2, PI+P2, and P2+P3 are respectively set to [0, 0, 0, 0, 0, 0], [1, 0, 0, 1, 1, 0], [1, 0, 0, 0, 1, 0], and [1, 1, 0, 1, 0, 0]. Then, the transmittance $[p_0, p_1, p_2, p_3, p_4, p_5]$ of CMYRGB for reproducing the target color [X, Y, Z] is calculated by the following formula.

[Formula 1]

$$\begin{bmatrix} p_0 \\ p_1 \\ p_2 \\ p_3 \\ p_4 \\ p_5 \end{bmatrix} = \begin{bmatrix} 1 & 1 & 1 \\ 0 & 0 & 1 \\ 0 & 0 & 0 \\ 1 & 0 & 1 \\ 1 & 1 & 0 \\ 0 & 0 & 0 \end{bmatrix} \begin{bmatrix} X_1 & Y_1 & Z_1 \\ X_2 & Y_2 & Z_2 \\ X_3 & Y_3 & Z_3 \end{bmatrix}^{-1} \begin{bmatrix} X - X_0 \\ Y - Y_0 \\ Z - Z_0 \end{bmatrix}$$

Even when the target color exists within the other tetrahedron, it is possible to similarly calculate the transmittance for reproducing the target color by using the coordinate values of each vertex of the corresponding tetrahedron in the three dimensional color space, and the transmittance of CMYRGB of the each vertex.

As described above, it is possible to reproduce the whole color at the vertexes of and within the color solid by calculating the transmittance of CMYRGB which is given to the first and second spatial optical modulation elements 1 and 2.

According to an example of the multi-primary color display method of the present invention, multi-primary color display is performed in such a manner that the first and second spatial optical modulation elements 1 and 2 having primary color characteristics which are mutually different and have overlapping wavelength bands, are used, and that the output from the first spatial optical modulation element 1 is input into the second spatial optical modulation element 2 so as to be modulated. This makes it possible to realize a color reproduction range wider than the conventional three primary color display.

Note that the calculation method of the transmittance of CMYRGB as described above, is only an example for reproducing the color within the color solid according to the multi-primary color display of the present invention. Thus, as long as the same target color [X, Y, Z] is reproduced, the combination of the other transmittance of CMYRGB may also be used. In particular, since the intensity of each primary color can be adjusted in two steps by the first and second spatial optical modulation elements 1 and 2, it is also possible to reproduce an image of a wide color gamut with a significantly finer gradation characteristic as compared with the conventional multi-primary color display method, in dependence upon the combination of the transmittance.

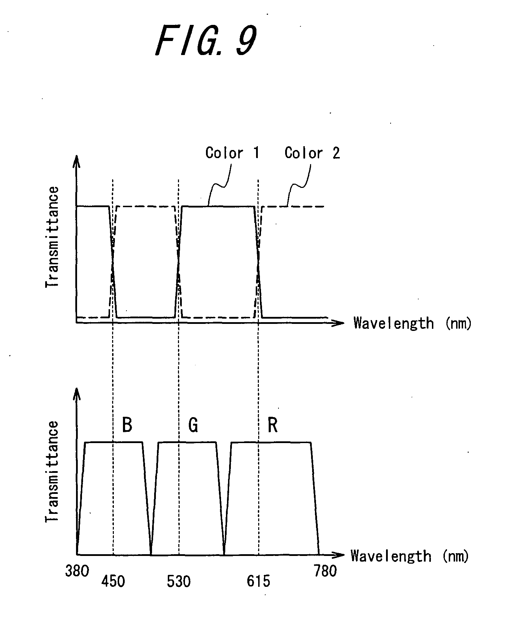

Further, in the above described multi-primary color display method according to the present invention, the first and second spatial optical modulation elements 1 and 2 are assumed to respectively have the primary color characteristics of the CMY system and the RGB system as shown in Fig. 2, but the primary color characteristics of the first and second spatial optical modulation elements 1 and 2 are not limited to this. For example, as shown in Fig. 9, one of the spatial optical modulation elements may have the primary color characteristics of RGB, and the other of the spatial optical modulation elements may have two kinds of primary color characteristics (color 1, color 2) based on a comb-like spectral shape with a transition wavelength at each center wavelength of the RGB.

Next, there will be described embodiments of a multi-primary color display device adapted to perform the multi-primary color display method according to the present invention, with reference to the accompanying drawings.

(First Embodiment)

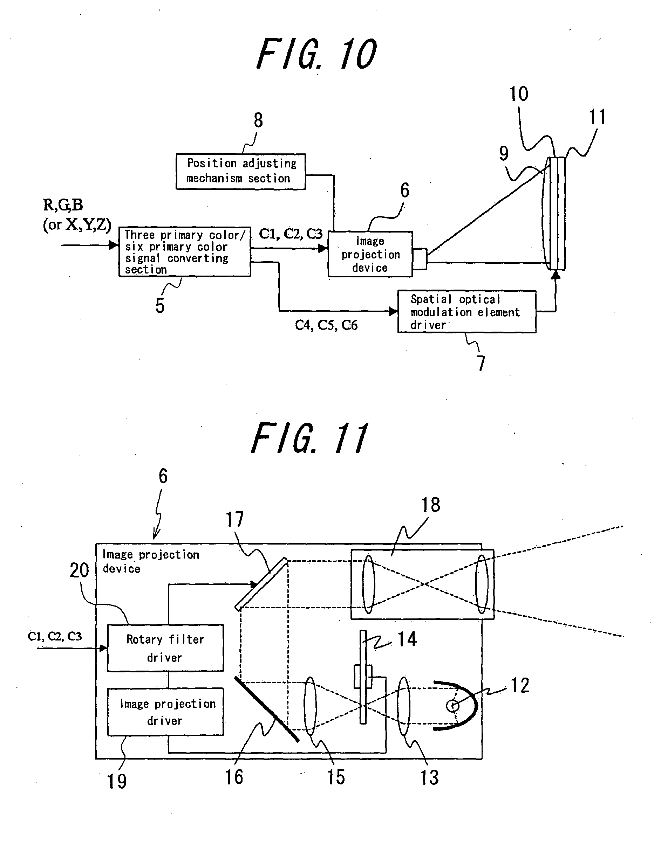

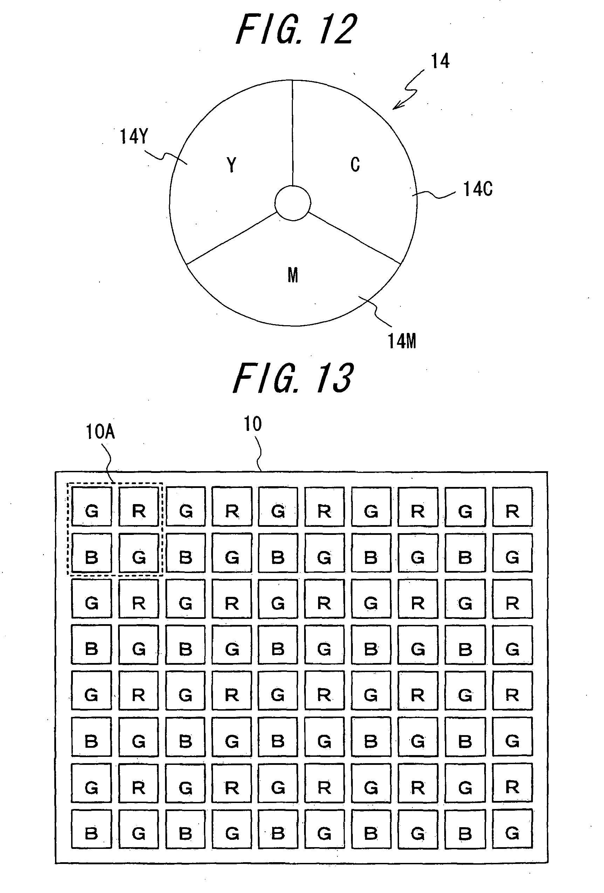

Fig. 10 to Fig. 13 show a first embodiment. Fig. 10 is a figure showing a schematic constitution of a multi-primary color display device. Fig. 11 is a figure showing a detailed constitution of the image projection device of Fig. 10. Fig. 12 is a figure showing a detailed constitution of the rotary filter of Fig. 11. Fig. 13 is a figure showing a detailed constitution of the spatial optical modulation element of Fig. 10.

As shown in Fig. 10, the multi-primary color display device according to the present embodiment includes: a three primary color/six primary color signal converting section 5 as multi-primary color signal conversion means adapted to receive video signals of conventional RGB three primary colors or video signals based on XYZ tristimulus values in the CIE1931XYZ color system and to convert the received signal to video signals of six primary colors expressed by C1 to C6; an image projection device 6 as first image forming means adapted to receive video signals of three primary colors based on C1 to C3 among the video signals of six primary colors converted by the three primary color/six primary color signal converting section 5, and to form a three primary color image as a first image; a spatial optical modulation element driver 7 adapted to receive video signals of the remaining three primary colors based on C4 to C6 among the video signals of six primary colors converted by the three primary color/six primary color signal converting section 5, and to control a spatial optical modulation element 10 as will be described below; a position adjusting mechanism section 8 as position adjustment means adapted to adjust position and orientation of the image projection device 6 in order to three-dimensionally adjust an image forming position of the three primary color image projected by the image projection device 6; a Fresnel lens 9 adapted to refract and diffract light projected by the image projection device 6 to make the light nearly perpendicularly incident on the surface of the spatial optical modulation element 10 as will be described below; the spatial optical modulation element 10 as second image forming means adapted, under the control of the spatial optical modulation element driver 7, to form a second image of the three primary colors based on C4 to C6 and to modulate light of the three primary color image as the first image, the light being passed through the Fresnel lens 9; and a diffusion plate 11 adapted to diffuse the light modulated by the spatial optical modulation element 10. In such constitution, the image projection device 6 corresponds to the first spatial optical modulation element 1 shown in Fig. 1, and the spatial optical modulation element 10 corresponds to the second spatial optical modulation element 2 shown in Fig. 1.

Specifically, as the image projection device 6, there is used a single-plate type DLP (registered trademark) projector, a three-plate type DLP projector, a transmission type liquid crystal projector, a reflection type liquid crystal projector, a laser projector, or an LED projector.

Fig. 11 shows a constitution of an example in which the single-plate type DLP projector is used as the image projection device 6. The image projection device 6 in this case includes a white light source 12, a condensing lens 13, a rotary filter 14, a collimator lens 15, a mirror 16, a spatial optical modulation element (DMD) 17, a projection lens 18, a rotary filter driver 19, and a spatial optical modulation element driver 20. The image projection device 6 is constituted so as to modulate and project a three primary color image in time division by controlling the spatial optical modulation element 17 and the rotary filter 14 on the basis of the video signals C 1 to C3 of three primary colors converted by the three primary color/six primary color signal converting section 5.

Note that in the present embodiment, it is assumed that three filters 14C, 14M and 14Y which are based on the spectroscopic characteristics of CMY (cyan, magenta, yellow) and arranged at equal angles or at unequal angles as shown in Fig. 12, are used as the rotary filter 14, to thereby project an image modulated in time division by using CMY as the three primary colors.

As the spatial optical modulation element 10, a transmission type color liquid crystal panel or the like is specifically used. The spatial optical modulation element 10, as an example of detailed constitution of which is shown in Fig. 13, is constituted by arranging conventional RGB filters in a matrix form at each pixel of the liquid crystal panel. A region 10A represented by a broken line in the figure constitutes one color pixel based on the RGB three primary colors.

The position adjusting mechanism section 8 adjusts position and orientation of the image projection device 6, in such a manner that an image forming position of a three primary color image projected from the image projection device 6 is set to the same position as the position of the spatial optical modulation element 10, and that one pixel projected from the image projection device 6 is set to the same position as the position of the region 10A (one color pixel constituted by the RGB three primary colors) in Fig. 13.

In the present embodiment, with the above described constitution, a multi-primary color image is generated in such a manner that an image of three primary colors of CMY modulated by the image projection device 6 is input into the spatial optical modulation element 10, so as to be further modulated with three primary colors of RGB by the spatial optical modulation element 10. Thereby, it is possible to realize a multi-primary color display capable of reproducing an image of a wide color gamut in a size almost the same as the conventional rear type projection system based on the three primary colors. That is, two sets of projectors are used for the multi-primary color display by the conventional rear type projection as disclosed in Patent Document 1. However, in the present embodiment, one projector is used, and hence it is possible to realize the multi-primary color display in a very compact constitution.

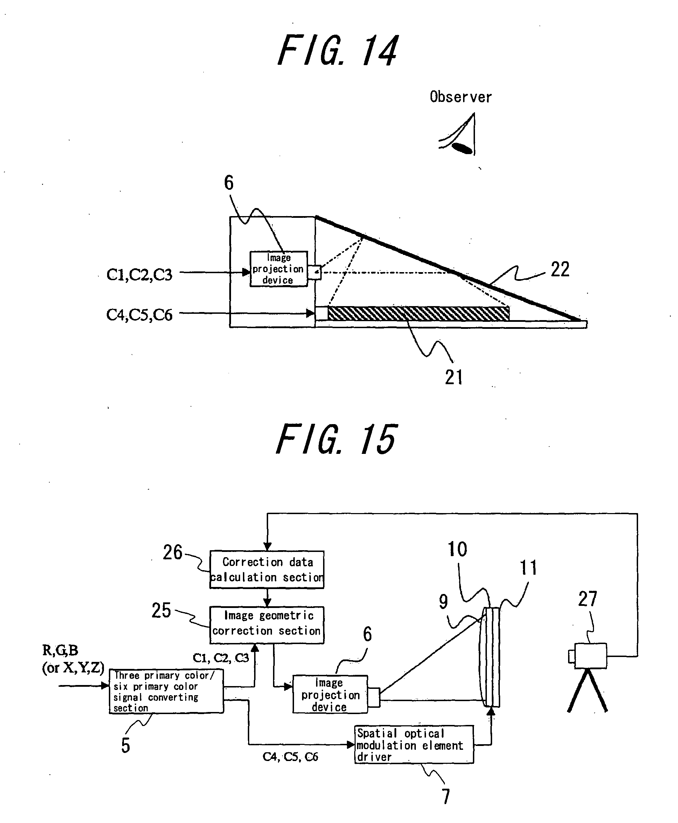

Note that in the present embodiment, the transmission type spatial optical modulation element 10 is used as the second image forming means, but the present embodiment is not limited to this. For example, as shown in Fig. 14, it is also possible to constitute the present embodiment, by using a reflection type spatial optical modulation element 21, in such a manner that after an image of three primary colors of CMY modulated by the image projection device 6 is reflected by a half mirror 22, the image of three primary colors of CMY is modulated with the three primary colors of RGB by the reflection type spatial optical modulation element 21 and pass through the half mirror 22 so as to be observed. The reflection type spatial optical modulation element 21 in this case can be constituted by using, for example, a reflection type liquid crystal panel, a polymer dispersed liquid crystal panel, a display devices using electronic ink, or the like.

(Second Embodiment)

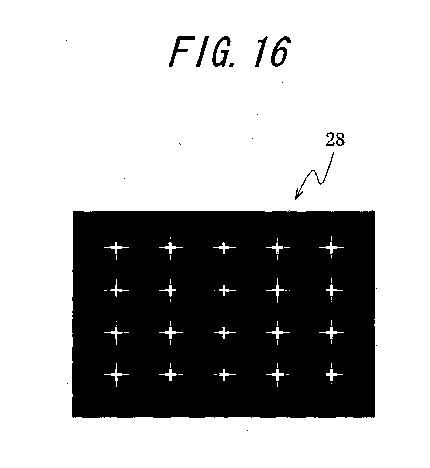

Fig. 15 and Fig. 16 show a second embodiment. Fig. 15 is a figure showing a schematic constitution of a multi-primary color display device. Fig. 16 is a figure showing an example a test chart image which is displayed at the time of position adjustment.

As shown in Fig. 15, the multi-primary color display device according to the present embodiment is constituted such that in place of the position adjusting mechanism section 8 in the first embodiment, an image geometric correction section 25 as geometric conversion means, a correction data calculation section 26, and imaging device 27 are provided, and the position correction between the image projection device 6 and the spatial optical modulation element 10 is automatically performed. The other constitution is the same as the first embodiment, and hence the description thereof is omitted.

In the following, the position correction in the present embodiment will be described. First, in the first step, a test chart image 28 for position adjustment, which has a plurality of cross-shaped feature points regularly arranged as shown in Fig. 16, is projected by the image projection device 6. The projected test chart image 28 for position adjustment is modulated at 100% of total pixel transmittance by the spatial optical modulation element 10, so that the test chart image 28 for position adjustment displayed on the diffusion plate 11 by the image projection device 6 is taken by the imaging device 27.

Next, in the second step, all pixel white (each of CMY is set to 100% luminance) is projected from the image projection device 6, and modulation of the test chart image 28 for position adjustment shown in Fig. 16 is performed in the spatial optical modulation element 10, so that the test chart image 28 for position adjustment displayed on the diffusion plate 11 by the spatial optical modulation element 10 is again taken by the imaging device 27.

Thereafter, in the third step, in the correction data calculation section 26, the difference between the position of the feature point in the test pattern image displayed by the image projection device 6 and the position of the feature point in the test pattern image displayed by the spatial optical modulation element 10, is detected from the respective images taken by the imaging device 27, so that correction data for correcting the difference in the pixel position is calculated.

Finally, in the fourth step, the pixel position conversion of an image input into the image projection device 6 is performed on the basis of the correction data calculated by the correction data calculation section 26. Thereby, the pixel positions of the image projected from the image projection device 6, and the pixel position in the spatial optical modulation element 10 automatically coincide with each other.

According to the present embodiment, since the pixel position of the image projection device 6 and the pixel position of the spatial optical modulation element 10 can be electrically and automatically adjusted, it is possible to substantially shorten maintenance time as compared with the case where the pixel positions are mechanically adjusted as in the first embodiment.

(Third Embodiment)

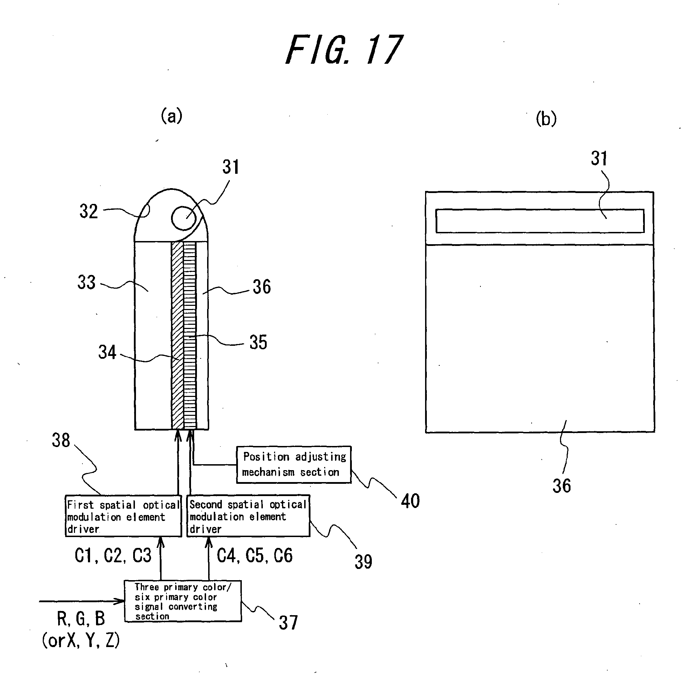

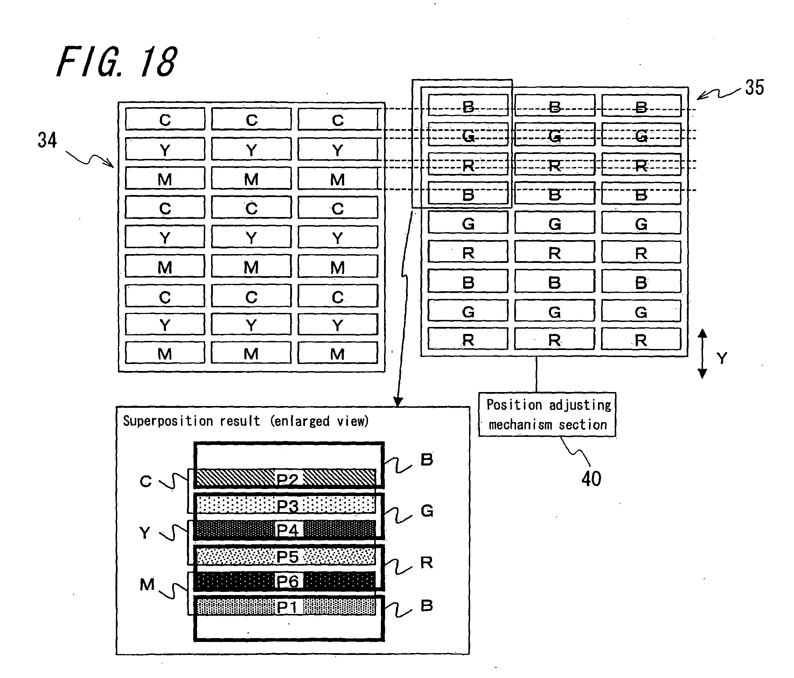

Fig. 17 and Fig. 18 show a third embodiment. Fig. 17(a) and Fig. 17(b) are a schematic side view and front view showing an entire constitution of a multi-primary color display device. Fig. 18 is a figure showing an example of a pixel arrangement and a positional relation of the first spatial optical modulation element and the second spatial optical modulation element of Fig. 17;

As shown in Fig. 17, the multi-primary color display device according to the present embodiment includes: a white fluorescent lamp 31 adapted to emit white light; a parabolic mirror 32 adapted to reflect the light emitted by the white fluorescent lamp 31, and to make the reflected light into substantially parallel light; a light guide plate 33 adapted to guide the light reflected by the parabolic mirror 32, as substantially uniform light, to the entire surface of a first spatial optical modulation element 34 as will be described below; the first spatial optical modulation element 34 adapted to modulate the light from the light guide plate 33 to form a first image; a second spatial optical modulation element 35 provided right behind the first spatial optical modulation element 34, and adapted to receive the first image formed by the first spatial optical modulation element 34, and to modulate the first image by a second image; a diffusion plate 36 adapted to diffuse the light modulated by the first and second spatial optical modulation elements 34 and 35; a three primary color/six primary color signal converting section 37 adapted to receive conventional RGB video signals or video signals based on XYZ tristimulus values in the CIE1931XYZ color system, and to convert the received video signal to video signals of six primary colors represented by C1 to C6; a first spatial optical modulation element driver 38 adapted to receive video signals of three primary colors based on C1 to C3 among the video signals of six primary colors converted by the three primary color/six primary color signal converting section 37, and to control transmittance of the first spatial optical modulation element 34; a second spatial optical modulation element driver 39 adapted to receive video signals of three primary colors based on C4 to C6, among the video signals of six primary colors converted by the three primary color/six primary color signal converting section 37, and to control transmittance of the second spatial optical modulation element 35; and a position adjusting mechanism section 40 as position adjustment means adapted to adjust pixel position of the second spatial optical modulation element 35.

The first spatial optical modulation element 34 and the second spatial optical modulation element 35 are in general a transmission type liquid crystal element (transmission type liquid crystal panel).. For example, as shown in Fig. 18, one of the modulation elements is constituted by arranging pixels respectively provided with CMY filters in a matrix form, and the other of the modulation elements is constituted by arranging pixels respectively provided with RGB filters in the matrix form. These first and second spatial optical modulation elements 34 and 35 are arranged at positions mutually shifted by half a pixel in the Y direction, Thereby, as also shown in a partially enlarged view in Fig. 18, the primary color pixels of P1 to P6 are respectively generated in half the size of the pixel of the spatial optical modulation elements 34 and 35, so that one color pixel of six primary colors is displayed by the juxtaposed additive color mixing of these six primary color pixels.

In addition, the position of the second spatial optical modulation element 35 is further finely adjusted in the Y direction by the position adjusting mechanism section 40 from the position shifted by half a pixel in the Y direction with respect to the first spatial optical modulation element 34. Thereby, it is possible to adjust, for example, the pixel sizes of primary colors assigned to P1 and P2 (note that in this case, the pixel sizes of primary colors assigned to P3 and P4, and the pixel sizes of primary colors assigned to P5 and P6 are also changed at the same time). This makes it possible to adjust the relative intensity of each primary color, and to adjust the total white balance.

As described above, it is possible to perform multi-primary color display in such a manner that the first and second spatial optical modulation elements 34 and 35 respectively having different primary color characteristics are overlapped so as to be mutually shifted by half a pixel. Thereby, it is possible to constitute an extremely thin multi-primary color display.

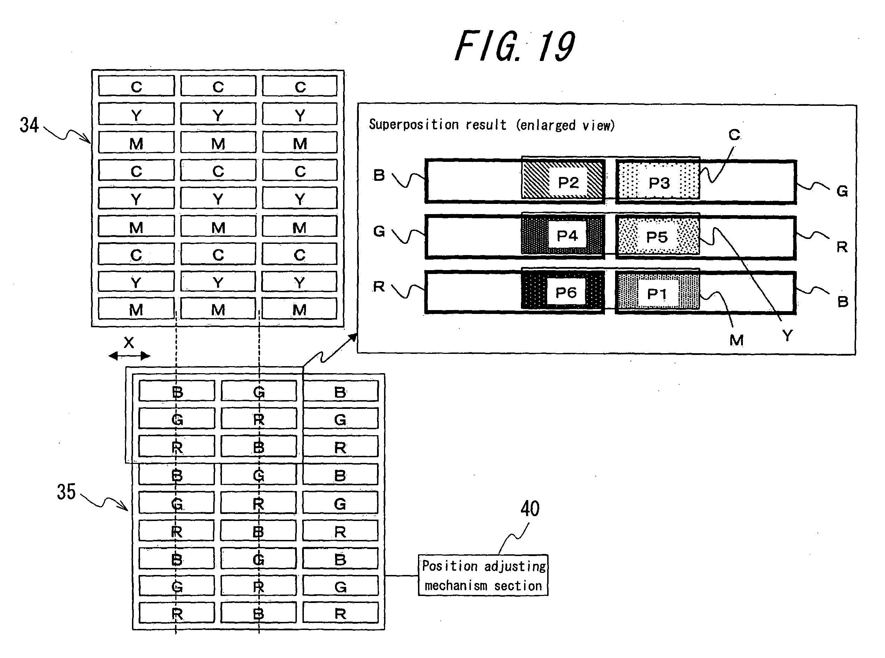

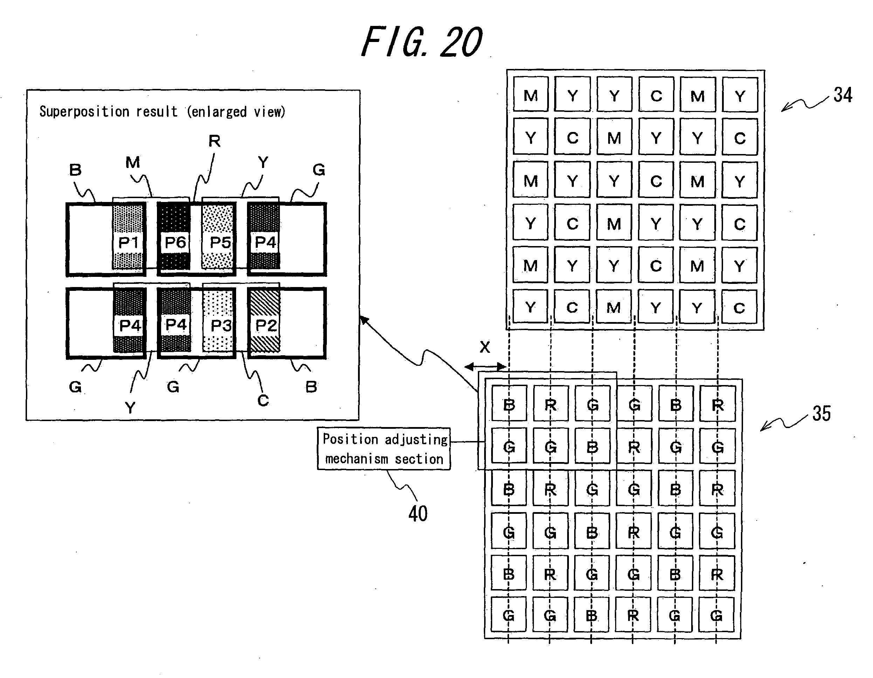

Note that in the above description, as shown in Fig. 18, the multiple primary color pixels are constituted by shifting the first and second spatial optical modulation elements 34 and 35 in the longitudinal direction (Y direction), but the present embodiment is not limited to this. For example, it is possible to obtain the same effect by mutually shifting the first and second spatial optical modulation elements 34 and 35 in the lateral direction (X direction), as shown in Fig. 19. Further, it is also possible to perform the multi-primary color display in such a manner that the filters of CMY and RGB which are respectively put in mosaic-like arrangement in the order as shown in Fig. 20 are used, so that the filters are mutually shifted, for example, in the lateral direction (X direction).

(Fourth Embodiment)

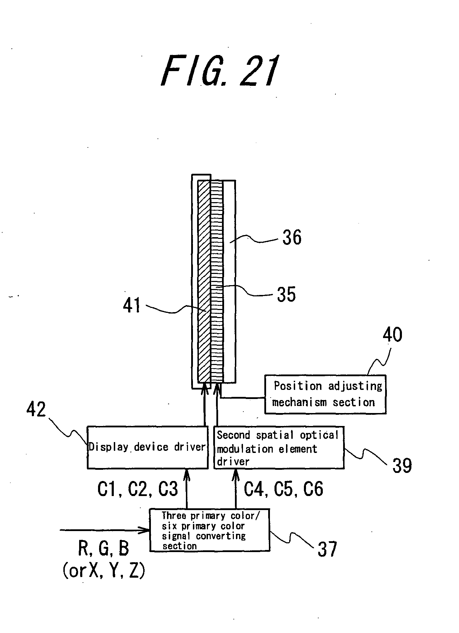

Fig. 21 a figure showing a schematic constitution of a multi-primary color display device according to a fourth embodiment of the present invention.

The present embodiment is constituted in such a manner that, in the third embodiment, the first transmission type spatial optical modulation element 34 constituting the first image forming means is replaced by a self light emission type display device 41, and that the self light emission type display device 41 is driven and controlled by a display device driver 42 on the basis of video signals C1 to C3 of three primary colors from the three primary color/six primary color signal converting section 37. Therefore, the white fluorescent lamp 31, the parabolic mirror 32, and the light guide plate 33, as described in the third embodiment, are not needed. The other constitution is the same as that of the third embodiment, and hence the description thereof is omitted.

Here, as the self light emission type display device 41, it is possible to use, for example, a PDP (plasma display panel), an FED (field emission display), an SED (surface electric field display), or EL (emission luminescence) elements or LED elements arranged in a matrix form, so as to display an image.

Note that as the self light emission type display device 41, a display device adapted to display an image (first image) by using primary color elements of the CMY system or the RGB system is used, and as the second transmission type spatial optical modulation element 35, an element using primary color filters of the CMY system or the RGB system is used. Further, similarly to the third embodiment, the self light emission type display devices 41 and the second spatial optical modulation element 35 are arranged so as to be mutually shifted by half a pixel, as shown in Fig. 18, Fig. 19, or Fig. 20.

According to the present embodiment, it is possible to realize a multi-primary color display similarly to the third embodiment. Further, since the white fluorescent lamp 31 or the like is not needed as compared with the third embodiment, it is possible to realize a multi-primary color display which is thin and has low power consumption.

(Fifth Embodiment)

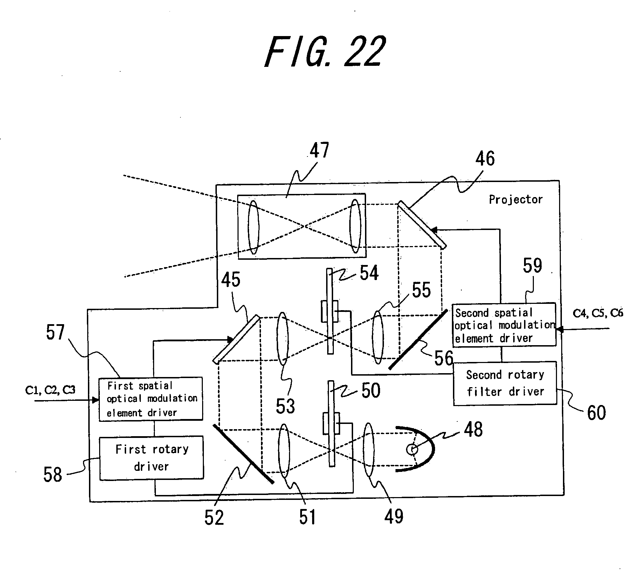

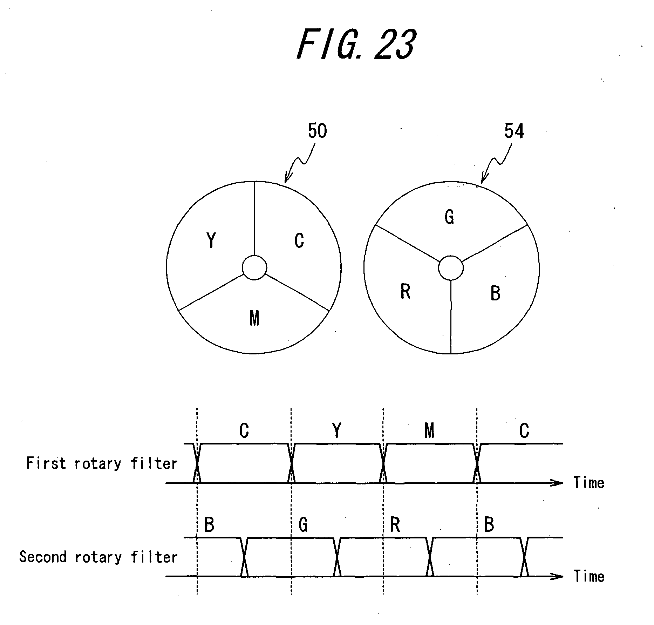

Fig. 22 and Fig. 23 show a fifth embodiment according to the present invention. Fig. 22 is a figure showing a schematic constitution of a multi-primary color display device. Fig. 23 is a figure showing a constitution of the first and second rotary filters shown in Fig. 22 and rotational phases of the filters.

The multi-primary color display device according to the present embodiment is adapted to project an image of multiple primary colors (six primary colors) in such a manner that first and second spatial optical modulation elements 45 and 46 are provided in one projector, and that light (first image) modulated by the first spatial optical modulation element 45 is formed into an image in the second spatial optical modulation element 46, and is again modulated by a second image formed by the second spatial optical modulation element 46 so as be projected by a projection lens 47.

That is, a multi-primary color image is displayed in such a manner that an incident light from a white light source 48 to the first reflection type spatial optical modulation element 45 by way of a condensing lens 49, a first rotary filter 50, a collimator lens 51 and a mirror 52 is modulated by the first spatial optical modulation element 45, that the modulated light is formed into an image in the second reflection type spatial optical modulation element 46 by way of a condensing lens 53, a second rotary filter 54, a relay lens 55 and a mirror 56, so as to be modulated, and that the light modulated by the second spatial optical modulation element 46 is projected by the projection lens 47.

Note that similarly to the above described embodiment, the first spatial optical modulation element 45 and the first rotary filter 50 are respectively controlled by a first spatial optical modulation element driver 57 and a first rotary filter driver 58 on the basis of video signals C1 to C3 of three primary colors among the six primary colors converted by the three primary color/six primary color signal converting section (not shown), and the second spatial optical modulation element 46 and the second rotary filter 54 are respectively controlled by a second spatial optical modulation element driver 59 and a second rotary filter driver 60 on the basis of video signals of the other three primary colors C4 to C6.

As shown in Fig. 23, one of the first rotary filter 50 and the second rotary filter 54 has respective primary color filters of the CMY system, and the other of the first rotary filter 50 and the second rotary filter 54 has respective primary color filters of the RGB system. These filters of the CMY system and the RGB system respectively have the spectral transmission characteristics as shown in Fig. 2.

The first and second rotary filters 50 and 54 are rotated with the phase shifted by about half a period on the time axis. In synchronization with this, the corresponding first and second spatial optical modulation element 45 and 46 are controlled by the first and second spatial optical modulation element drivers 57 and 59, so as to modulate the respective primary colors with the phase shifted by about half a period on the time axis. Thereby, the image modulated by the first and second spatial optical modulation elements 45 and 46 is formed into a six primary color image in which the six primary colors P 1 to P6 are modulated in time division as shown in Fig. 4, and projected by the projection lens 47.

According to the present embodiment, since a multi-primary color image can be projected by one projector, it is possible to realize a multi-primary color display device excellent in portability. Further, in particular, the first and second spatial optical modulation elements 45 and 46 and the first and second spatial optical modulation element drivers 57 and 59 need only to respectively perform modulation and control of three primary colors. Thus, it is not necessary to double the time resolution of the modulation and control of each primary color, even in the case of six primary colors as disclosed in Patent Document 5. Therefore, it is possible to easily realize a multi-primary color display device by utilizing a conventional three primary color control device.

(Sixth Embodiment)

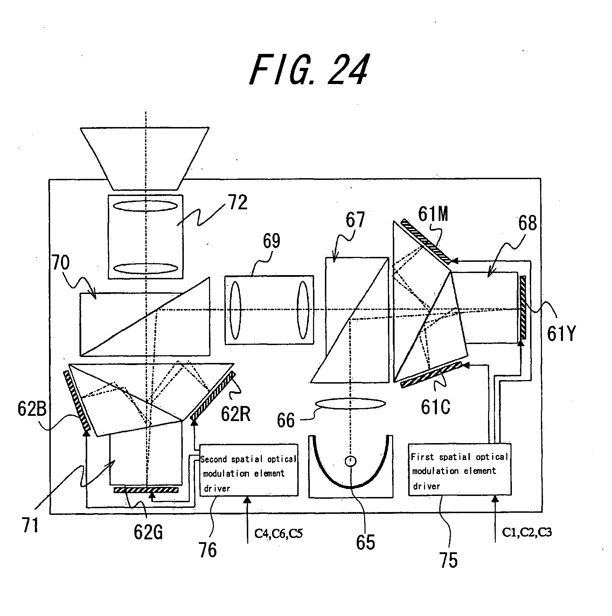

Fig. 24 is a figure showing a schematic constitution of a multi-primary color display device according to a sixth embodiment of the present invention.

The multi-primary color display device according to the present embodiment is constituted in such a manner that three pieces of spatial optical modulation elements 61C, 61M and 61Y constituting first image forming means, and three pieces of spatial optical modulation elements 62R, 62G and 62B constituting second image forming means are provided in one projector, so as to project a six primary color image by modulating images of respective primary colors of CMY and RGB with the six pieces of spatial optical modulation elements.

That is, a light beam from a white light source 65 is simultaneously decomposed into light beams of the CMY three primary colors by a first color decomposing and composing prism 68 by way of a condensing lens 66 and a first TIR prism 67, and the light beams of respective primary colors are respectively modulated by the corresponding spatial optical modulation elements 61C, 61M and 61Y. Thereafter, the modulated light beams of respective primary colors are again composed by the first color decomposing and composing prism 68. The composed image (first image) of the CMY three primary colors is simultaneously decomposed into images of the RGB three primary colors by a second color decomposing and composing prism 71 by way of the first TIR prism 67, a relay lens 69, and a second TIR prism 70. The decomposed images of the RGB primary colors are respectively formed in the corresponding spatial optical modulation elements 62R, 62G and 62B, so as to be modulated with a second image formed by the spatial optical modulation elements 62R, 62G and 62B. Thereafter, the modulated images of the RGB primary colors are again composed by the second color decomposing and composing prism 71 and projected through the second TIR prism 70 and a projection lens 72.

Note that the modulation and control of the spatial optical modulation elements 61C, 61M and 61Y are independently and simultaneously performed by a first spatial optical modulation element driver 75 on the basis of video signals C1 to C3 of the three primary colors among the six primary colors converted by the three primary color/six primary color signal converting section (not shown) as described in the above described embodiment, and the modulation and control of the spatial optical modulation elements 62R, 62G and 62B are independently and simultaneously performed by a second spatial optical modulation element driver 76 on the basis of video signals C4 to C6 of the other three primary colors.

In this way, the light once decomposed into the CMY, and then modulated by the respective spatial optical modulation elements 61C, 61M and 61 Y, is composed. The composed light is decomposed into the RGB, and then modulated by the respective spatial optical modulation elements 62R, 62G and 62B, so as to be composed again. Thereby, the light eventually composed is formed into the light modulated with the six primary colors and projected, similarly to the above described embodiment.

According to the present embodiment, it is possible to realize a multi-primary color (six primary colors) display device having a high light utilization efficiency and high luminance by one projector. Further, for example, in performing a six primary color display, a light beam is once decomposed into light beams of three primary colors, so as to be modulated and composed, and then the composed light beam is decomposed into light beams of the other three primary colors, so as to be modulated and composed. Therefore, it is possible to reduce the size of the entire device as compared with the case where a light beam from a white light source is divided into light paths of six primary colors from the beginning. Further, as the constitution to divide a light beam into light paths of three primary colors, it is possible to use a conventional three primary color display device, and to thereby realize a multi-primary color display device by a comparatively little modification of the conventional three primary color display device.

(Seventh Embodiment)

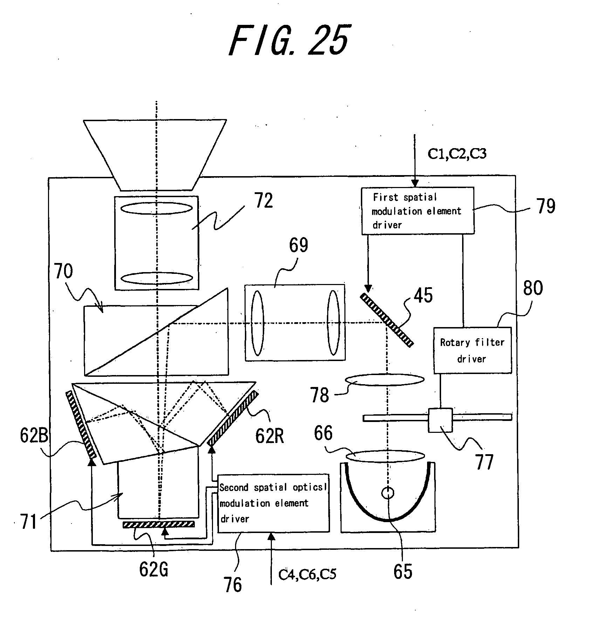

Fig. 25 is a figure showing a schematic constitution of a multi-primary color display device according to a seventh embodiment of the present invention.

The multi-primary color display device according to the present embodiment is constituted by replacing the spatial optical modulation elements 61C, 61M and 61Y constituting the first image forming means of the sixth embodiment with the first spatial optical modulation element 45 of the fifth embodiment.

For this reason, the incident light from the white light source 65 to the first spatial optical modulation element 45 by way of the condensing lens 66, a rotary filter 77, and a collimator lens 78, is modulated into images of the respective three primary colors using a frame sequential method, and the light modulated by the first spatial optical modulation element 45 enter into the second TIR prism 70 through the relay lens 69. Note that the first spatial optical modulation element 45 and the rotary filter 77 are respectively controlled by a spatial optical modulation element driver 79 and a rotary filter driver 80 on the basis of video signals C 1 to C3 of the three primary colors among the six primary colors converted by the three primary color/six primary color signal converting section (not shown), similarly to the fifth embodiment. The other constitution is the same as that of the sixth embodiment, and hence the description thereof is omitted.

Also in the present embodiment, it is possible to obtain the same effect as the sixth embodiment.

(Eighth Embodiment)

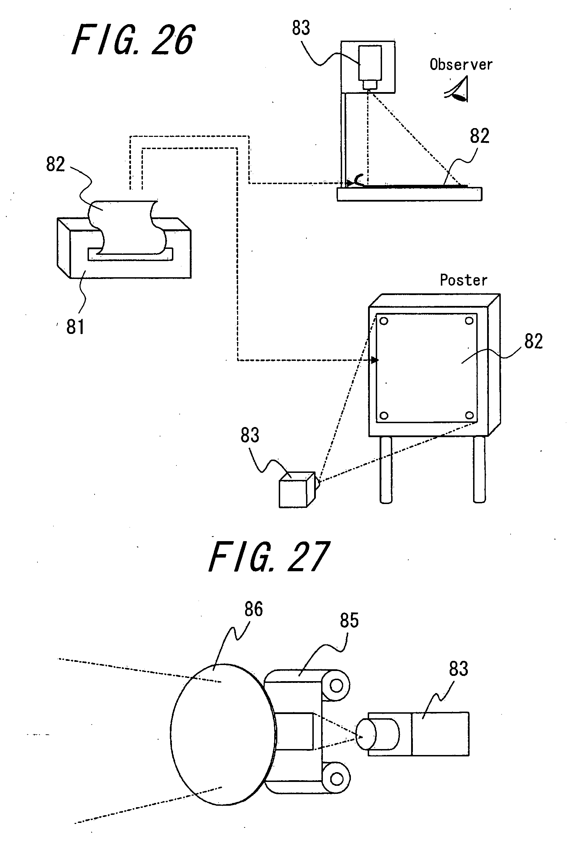

Fig. 26 is a figure for explaining a multi-primary color display device according to an eighth embodiment of the present invention.

The multi-primary color display device according to the present embodiment is adapted to enable a multi-primary color image to be observed by making an image from a projector 83 projected and illuminated on an image developed on a reflection type image medium 82, such as a hard copy, output from an image forming apparatus 81, such as a printer and a printing machine.

Here, a projector 83 corresponds to the first image forming means, and the image medium 82 corresponds to the second image forming means. Further, an image is formed on the image medium 82 by, for example, RGB dot patterns based on the juxtaposed additive color mixing, and the projector 83 projects images of the CMY primary colors in time division using a frame sequential method, similarly to the first embodiment. Further, the position of the image projected by the projector 83 is adjusted so as to make one pixel of the projected image correspond to the size of one set of color dots consisting of the RGB three dots in the image on the image medium 82.

According to the present embodiment, similarly to the above described embodiments, the light reflected from the image on the image medium 82 is observed by an observer as being light modulated by the six primary colors, and hence it is possible to perform image reproduction of a wide color gamut based on multiple primary colors by using a hard copy output from a conventional printer, printing machine or the like. Therefore, the present embodiment can be used in various applications, such as various kinds of image display devices, and posters.

(Ninth Embodiment)

Fig. 27 is a perspective view showing a schematic constitution of a multi-primary color display device according to a ninth embodiment of the present invention.

The multi-primary color display device according to the present embodiment is constituted as a film projector adapted to enable a multi-primary color image to be observed, in such a manner that an image developed on a transmission type positive film 85 is spatially modulated by being projected and illuminated with an image from the projector 83 as described in the eighth embodiment, and the spatially modulated image is projected and displayed on a screen (not shown) or the like, by a projection lens 86. Here, the projector 83 corresponds to the first image forming means, and the positive film 85 corresponds to the second image forming means.

In this way, according to the present embodiment, it is possible to project an image of a wider color gamut as compared with a conventional film projector, in such a manner that an image is projected to an image developed on the positive film 85 from the projector 83 by using a light source illuminating portion of a conventional film projector as the projector 83.

According to the embodiments of the present invention as described above, by using first image forming means and second image forming means respectively having mutually different primary color characteristics, a first image formed by the first image forming means is input into the second image forming means, so as to be modulated by a second image formed by the second image forming means. Thereby it is possible to constitute a display capable of reproducing an image of a wide color gamut based on multiple primary colors. Therefore, it is possible to realize a multi-primary color display device having an extremely compact constitution in a rear type projection display, a projector device, or a thin display.

Further, since the multi-primary color display is performed not by increasing primary color pixels in the spatial direction, but by increasing the pixels in the depth direction, decreasing of the resolution is not caused. In addition, the first image and the second image can be formed temporally in parallel, which also prevent the time resolution from being decreased by the increase in the number of primary colors. Further, it is possible to perform the intensity modulation of the respective primary colors in two steps by forming the first image and the second image, and to thereby reproduce an image in finer gradation as compared with the conventional multi-primary color display.

**Claims**

1.  A multi-primary color display method for displaying an image by four or more primary colors, comprising:

    forming a first image by light of two or more primary colors; and
    displaying an image consisting of four or more primary colors, by spatially modulating the first image with a second image consisting of two or more primary colors having spectroscopic characteristics different from spectroscopic characteristics of the light of the two or more primary colors forming the first image.

2.  The multi-primary color display method according to claim 1, wherein
    at least one primary color forming the second image has a wavelength band partially overlapping with a wavelength band of light of at least two primary colors forming the first image, and
    light of at least one primary color forming the first image has a wavelength band partially overlapping with a wavelength band of at least two primary colors forming the second image.

3.  The multi-primary color display method according to claim 1 or 2, wherein the first image is formed by spatially modulating the light of two or more primary colors.

4.  The multi-primary color display method according to claim 1 or 2, wherein the first image is formed by spatially emitting the light of two or more primary colors.

5.  The multi-primary color display method according to any one of claims 1 to 4, wherein the second image is formed by spatially modulating light of the two or more primary colors.

6.  The multi-primary color display method according to claim 1 or 2, wherein the second image is formed by being developed on an image medium with the two or more primary colors.

7.  A multi-primary color display device adapted to display an image formed by four or more primary colors, comprising:

    first image forming means adapted to form a first image by light of two or more primary colors; and
    second image forming means adapted to form a second image consisting of two or more primary colors having a spectroscopic characteristics different from a spectroscopic characteristics of the light of the two or more primary colors forming the first image,

    wherein an image consisting of four or more primary colors is displayed by spatially modulating the first image formed by the first image forming means with the second image formed by the second image forming means.

8. The multi-primary color display device according to claim 7, wherein
at least one primary color forming the second image has a wavelength band partially overlapping with a wavelength band of light of at least two primary colors forming the first image, and
light of at least one primary color forming the first image has a wavelength band partially overlapping with a wavelength band of at least two primary colors forming the second image.

9. The multi-primary color display device according to claim 7 or 8, further comprising position adjustment means adapted to adjust spatial position of at least one of the first image forming means and the second image forming means.

10. The multi-primary color display device according to any one of claims 7 to 9, further comprising geometric conversion means adapted to perform geometric correction of an image signal input into at least one of the first image forming means and the second image forming means.

11. The multi-primary color display device according to any one of claims 7 to 10, further comprising multi-primary color signal conversion means adapted to receive an image signal based on tristimulus values or three primary colors and to convert the image signal into signals of four or more primary colors, and adapted to output the signals of at least two primary colors of the converted signals to the first image forming means and to output the signals of remaining two or more primary colors of the converted signals to the second image forming means.

12. The multi-primary color display device according to any one of claims 7 to 9, wherein the second image forming means is an image medium on which the second image is developed.

13. The multi-primary color display device according to any one of claims 7 to 12, wherein the first image forming means is a projector adapted to project the first image, with the second image forming means being at an image forming position of the projector.

# FIG. 1

# FIG. 2

# FIG. 3

(a)                                                    (b)

# FIG. 4

(a)

(b)

Transmittance

P1 P2 P3 P4 P5 P6

Wavelength (nm)

380        780

450    530    615

y

P4

P3

P5

P6

P2

P1

x

# FIG. 5

| Zero order color (black) | — | | | | | |
| --- | --- | --- | --- | --- | --- | --- |
| | [B,G,R,M,C,Y] = [0,0,0,0,0,0] | | | | | |
| First order color | P1 | P2 | P3 | P4 | P5 | P6 |
| | [1,0,0,1,0,0] | [1,0,0,0,1,0] | [0,1,0,0,1,0] | [0,1,0,0,0,1] | [0,0,1,0,0,1] | [0,0,1,1,0,0] |
| Second order color | P1+P2 | P2+P3 | P3+P4 | P4+P5 | P5+P6 | P6+P1 |
| | [1,0,0,1,1,0] | [1,1,0,0,1,0] | [0,1,0,0,1,1] | [0,1,1,0,0,1] | [0,0,1,1,0,1] | [1,0,1,1,0,0] |
| Third order color | P1+P2+P3 | P2+P3+P4 | P3+P4+P5 | P4+P5+P6 | P5+P6+P1 | P6+P1+P2 |
| | [1,1,0,1,1,0] | [1,1,0,0,1,1] | [0,1,1,0,1,1] | [0,1,1,1,0,1] | [1,0,1,1,0,1] | [1,0,1,1,1,0] |
| Fourth order color | P1+P2+P3+P4 | P2+P3+P4+P5 | P3+P4+P5+P6 | P4+P5+P6+P1 | P5+P6+P1+P2 | P6+P1+P2+P3 |
| | [1,1,0,1,1,1] | [1,1,1,0,1,1] | [0,1,1,1,1,1] | [1,1,1,1,0,1] | [1,1,1,1,0,1] | [1,1,1,1,1,0] |
| Fifth order color | P1+P2+P3+P4+P5 | P2+P3+P4+P5+P6 | P3+P4+P5+P6+P1 | P4+P5+P6+P1+P2 | P5+P6+P1+P2+P3 | P6+P1+P2+P3+P4 |
| | — | — | — | — | — | — |
| Sixth order color (white) | P1+P2+P3+P4+P5+P6 | | | | | |
| | [1,1,1,1,1,1] | | | | | |

# FIG. 6

(a)

(b)

(Example of fifth order color)

Transmittance

P1 P2 P3 P4 P5 P6

380

450  530  615

780

Wavelength (nm)

⇒ ×

▨ Display impossible region

Y

Fourth
order
color

Fifth
order
color

Sixth
order
color
(white)

Third
order
color

Fifth
order
color

Second
order
color

Fourth
order
color

First
order
color

Third
order
color

First
order
color

Second
order color

Second
order
color

X, Z

Zero order
color (black)

Color gamut by six primary color display

# FIG. 7

# FIG. 8

[1,0,0,1,1,0]
[X2,Y2,Z2]

[1,1,0,1,0,0]
[X3,Y3,Z3]

Target color

[1,0,0,0,1,0]
[X1,Y1,Z1]

P1+P2    [X,Y,Z]

P2+P3

P2

Zero order color (black)
[0, 0, 0, 0, 0, 0]
[X0, Y0, Z0]

# FIG. 9

Color 1    Color 2

Transmittance

Wavelength (nm)

Transmittance

B       G       R

Wavelength (nm)

380    450    530    615    780

EP 1 884 919 A1

# FIG. 10

R,G,B (or X,Y,Z)

Position adjusting mechanism section — 8

Three primary color/ six primary color signal converting section — 5

C1, C2, C3 → Image projection device — 6

C4, C5, C6 → Spatial optical modulation element driver — 7

9, 10, 11

# FIG. 11

Image projection device — 6

C1, C2, C3 → Rotary filter driver — 20

Image projection driver — 19

17, 18, 14, 12, 16, 15, 13

25

## FIG. 12

## FIG. 13

## FIG. 14

Observer

6

C1,C2,C3

C4,C5,C6

Image projection device

22

21

## FIG. 15

26 — Correction data calculation section

25 — Image geometric correction section

10

11

9

6

27

R,G,B (or X,Y,Z)

Three primary color/ six primary color signal converting section

C1, C2, C3

Image projection device

5

C4, C5, C6

Spatial optical modulation element driver

7

# FIG. 16

# *FIG. 17*

(a)

(b)

31

32

33 — 36

34 — 35

38

Position adjusting
mechanism section

First spatial optical
modulation element
driver

Second spatial optical
modulation element
driver

40

39

C1, C2, C3        C4, C5, C6

Three primary color/
six primary color
signal converting
section

R, G, B
(orX, Y, Z)

37

31

36

# FIG. 18

| C | C | C |
|---|---|---|
| Y | Y | Y |
| M | M | M |
| C | C | C |
| Y | Y | Y |
| M | M | M |
| C | C | C |
| Y | Y | Y |
| M | M | M |

34

35

| B | B | B |
|---|---|---|
| G | G | G |
| R | R | R |
| B | B | B |
| G | G | G |
| R | R | R |
| B | B | B |
| G | G | G |
| R | R | R |

Y

Superposition result (enlarged view)

C — P2 — B
— P3 — G
Y — P4 — G
— P5 — R
M — P6 — R
— P1 — B

Position adjusting
mechanism section

40

EP 1 884 919 A1

FIG. 19

# FIG. 20

Superposition result (enlarged view)

34

35

Position adjusting
mechanism section

40

X

EP 1 884 919 A1

# FIG. 21

36

35

41

40

Position adjusting
mechanism section

42

Display device driver

Second spatial optical
modulation element
driver

39

C1, C2, C3

C4, C5, C6

Three primary color/
six primary color
signal converting
section

37

R, G, B
(or X, Y, Z)

# FIG. 22

47
46
Projector

54
55
45
59
57
Second spatial optical modulation element driver
C4, C5, C6
C1, C2, C3
First spatial optical modulation element driver
56
Second rotary filter driver
60
53
50
First rotary driver
58
48
52
51
49

# FIG. 23

50

54

Y    C

M

G

R    B

First rotary filter

| C | Y | M | C |

→ Time

Second rotary filter

B | G | R | B

→ Time

# FIG. 24

# FIG. 25

## FIG. 26

83

Observer

82

82

81

Poster

82

83

## FIG. 27

86    85

83

<table>
<tr><td colspan="2">**INTERNATIONAL SEARCH REPORT**</td><td>International application No.<br>PCT/JP2006/310226</td></tr>
</table>

A. CLASSIFICATION OF SUBJECT MATTER
*G09G5/02*(2006.01), *G09G3/20*(2006.01), *G03B21/00*(2006.01), *G06T1/00*
(2006.01), *H04N1/60*(2006.01), *H04N1/46*(2006.01)

According to International Patent Classification (IPC) or to both national classification and IPC

B. FIELDS SEARCHED

Minimum documentation searched (classification system followed by classification symbols)
G09G3/00-5/42, G02F1/13, 1/137-1/141, G03B21/00, G09F9/00-9/46,
H04N5/66-5/74, 9/12-9/31, 9/44-9/78

Documentation searched other than minimum documentation to the extent that such documents are included in the fields searched
Jitsuyo Shinan Koho        1922-1996    Jitsuyo Shinan Toroku Koho    1996-2006
Kokai Jitsuyo Shinan Koho  1971-2006    Toroku Jitsuyo Shinan Koho    1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2000-253263 A  (Olympus Optical Co., Ltd.),<br>14 September, 2000 (14.09.00),<br>Full text; all drawings<br>& US 6538742 B1        & US 2003/0137610 A1 | 1-13 |
| A | JP 2004-138827 A  (Sharp Corp.),<br>13 May, 2004 (13.05.04),<br>Full text; all drawings<br>(Family: none) | 1-13 |
| A | JP 2004-286963 A  (Seiko Epson Corp.),<br>14 October, 2004 (14.10.04),<br>Full text; all drawings<br>(Family: none) | 1-13 |

| ☒ | Further documents are listed in the continuation of Box C. | ☐ | See patent family annex. |

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>15 June, 2006 (15.06.06) | Date of mailing of the international search report<br>27 June, 2006 (27.06.06) |
|---|---|
| Name and mailing address of the ISA/<br>Japanese Patent Office | Authorized officer |
| Facsimile No. | Telephone No. |

Form PCT/ISA/210 (second sheet) (April 2005)

# EP 1 884 919 A1

| | INTERNATIONAL SEARCH REPORT | International application No. |
|---|---|---|
| | | PCT/JP2006/310226 |

C (Continuation).   DOCUMENTS CONSIDERED TO BE RELEVANT

| Category* | Citation of document, with indication, where appropriate, of the relevant passages | Relevant to claim No. |
|---|---|---|
| E,A | JP 2006-146036 A  (Olympus Corp.),<br>08 June, 2006 (08.06.06),<br>Full text; all drawings<br>(Family: none) | 1-13 |
| A | JP 2003-315778 A  (Toppan Printing Co., Ltd.),<br>06 November, 2003 (06.11.03),<br>Full text; all drawings<br>(Family: none) | 1-13 |

Form PCT/ISA/210 (continuation of second sheet) (April 2005)

40

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000338950 A
- JP 2003107472 A
- JP 2003228360 A

- JP 2003249174 A
- JP 2004286963 A